# EUROPEAN PATENT APPLICATION

(11) **EP 1 013 174 A2**
(43) Date of publication of application: **28.06.2000**
(21) Application number: 99204503.9
(22) Date of filing: 23.12.1999
(51) Int. Cl.: A23C 13/12

(54) **Edible fat emulsion in a pressure vessel**

(30) Priority: 23.12.1998 NL 1010881
(71) Applicant: Menken Dairy Food B.V., 4751 GS Oud Gastel (NL)
(72) Inventor: Meijer, Margarethe Jennie, 4761 SV Zevenbergen (NL)
(74) Representative: Wittop Koning, Tom Hugo

(57) **Abstract**

Pressure vessel, in particular a spray can, comprising:
- a liquid, unwhipped edible fat emulsion having a fat content of between 30 and 48% (w/w), wherein the volume-weighted mean diameter of fat particles is greater than 2.75 µm,
- dispensing means for dispensing the fat emulsion in the whipped state,
- a propellant and expansion medium which comprises
   - 40-90 vol%, based on the medium, of a first gas which substantially dissolves in the emulsion,
   - 10-60 vol%, based on the medium, of a second gas which substantially does not dissolve in the emulsion, wherein
   - the propellant and expansion medium is selected such that the overrun of the fat emulsion when dispensed is between 100% and 450%.

## Description

The present invention relates to a pressure vessel, in particular a spray can, said pressure vessel comprising a liquid, unwhipped edible fat emulsion having a fat content of between 30 and 48% (w/w), and said pressure vessel comprising dispensing means for dispensing the fat emulsion in the whipped state. Such vessels are generally known in the art, especially for forming whipped cream and products similar to whipped cream.

Whipping cream from such a pressure vessel, herein also referred to as "spray cream", then has the advantage, compared with hand-whipped cream, that the cream is dispensed in the whipped state and therefore is directly suitable for consumption without further processing. Furthermore, the cream can be metered in a simple manner and keeps better than hand-whipped cream. For the purpose of the present application, whipping-cream-like products, herein also referred to as "spray cream substitutes", relate to any whippable edible fat emulsion with which a whipped product can be formed by delivery from a spray can. Such a fat emulsion can comprise milk fat, vegetable fat, animal fat or synthetic fat or a combination thereof.

Vegetable-fat emulsions accommodated in a spray can are known in the art. The taste of such a spray cream substitute is considerably inferior, however, to that of spray cream.

It should be noted that the volume-weighted mean diameter of the fat particles in all liquid unwhipped edible fat emulsions currently known for use in a spray can for dispensing spray cream or a spray cream substitute is 2.5 µm or less. This is a consequence of homogenization of the fat emulsion prior to it being packaged in the vessel, which is carried out to confer a satisfactory shelf life to the emulsion.

Since the homogenization technique has become customary, the fat emulsions, prior to being held in a spray can, have been homogenized without exception, the volume-weighted mean diameter of the fat particles of the fat emulsion being 2.5 µm or less. It is true that in the early years of whipping-cream spray can technology, i.e. in the thirties and forties, unhomogenized fat emulsions, for example whipping cream, have been put into pressure vessels (see for example US-A-2294172 and US-A-2435682), but the dispensed product often proved unstable and proved not to keep very well. The storing of unhomogenized fat emulsion has therefore fallen completely out of use since homogenization technology has been employed.

The abovementioned volume-weighted mean diameter of the particles (also known as the D_{(4,3)} value) can be calculated on the basis of particle size measurements, for example by means of laser defraction equipment. A D_{(4,3)} value of 2.75 µm means that the volume-weighted mean diameter of the fat particles is 2.75 µm.

In the present application the term "pressure vessel which comprises dispensing means for dispensing the composition in the whipped state" refers to any packaging which holds the fat emulsion and which contains a valve for dispensing and/or metering the fat emulsion from the packaging in a controlled manner when the valve is opened. The contents of the packaging are under pressure and are dispensed in the whipped state, as a result of the vessel holding a propellant and expansion medium.

It was found, surprisingly, that a highly stable spray cream or spray cream substitute, which in terms of appearance, stability and mouth feel is comparable to hand-whipped cream, can be obtained by means of a pressure vessel, in particular a spray can, comprising:
- a liquid, unwhipped edible fat emulsion having a fat content of between 30 and 48% (w/w), wherein the volume-weighted mean diameter of fat particles is greater than 2.75 µm,
- dispensing means for dispensing the fat emulsion in the whipped state,
- a propellant and expansion medium which comprises
   - 40-90 vol%, based on the medium, of a first gas which substantially dissolves in the emulsion,
   - 10-60 vol%, based on the medium, of a second gas which substantially does not dissolve in the emulsion, wherein
   - the propellant and expansion medium is selected such that the overrun of the fat emulsion when dispensed is between 100% and 450%.

Of substantial importance in obtaining the stable spray cream or spray cream substitute are not only the high fat content of the emulsion, but also the unusually high volume-weighted mean diameter and the propellant and expansion medium. The prior-art fat emulsions packaged in a spray can for spray cream or spray cream substitute are homogenized, as stated hereinabove, as a result of which the mean fat sphere diameter of the fat particles in the emulsion, expressed as the volume-weighted mean diameter of the fat particles, is less than 2.5 µm.

It is precisely by combining an edible fat emulsion having a high fat content, the volume-weighted mean diameter of the fat particles being greater than 2.75 µm, and the propellant and expansion medium according to the invention that an extremely stable spray cream or spray cream substitute is obtained whose stability, appearance and mouth feel is indistinguishable or virtually indistinguishable from those of hand-whipped cream.

A spray can according to the invention is then also very suitable for decorating cakes and pastries, highly stable and attractive decorations of whipping cream or whipping cream substitutes being obtained in the process. The term "overrun" indicates the volume increase of the spray cream after delivery compared with the volume in the state as it is held in the vessel. Thus an overrun of 300% means that a volume of 100 ml in the vessel after delivery has increased to 400 ml. The overrun of spray cream in the prior art it generally 450-550%.

It was found that if the desired overrun is obtained by means of a propellant/expansion medium which is customarily used for this purpose in the art and which completely dissolves in the fat emulsion, the desired stable product having the appearance and mouth feel, comparable with hand-whipped cream, is not obtained.

To obtain the desired overrun while retaining the stability, mouth feel and appearance of the spray cream or spray cream substitute to be obtained, without the propellant capacity of the pressure vessel being adversely affected, the vessel contains a mixture, as the propellant and expansion medium, of a first gas which substantially dissolves in the emulsion, and a second gas which substantially does not dissolve in the emulsion. Gas in this context refers to an expansion medium and/or propellant which is in the form of a gas at 1 atmosphere and 20°C. While pressurized in the vessel, the gas in question can be a liquid. The first gas, which dissolves in the emulsion, is subject to the requirement that at least such an amount of the gas will dissolve in the emulsion, that the dissolved gas, when the emulsion is dispensed, expands sufficiently to ensure the desired overrun. It was found that if more than 80 vol% of said first gas is used in the expansion/propellant medium, an excessive amount of said first gas will dissolve in the emulsion, thereby resulting in a whipping-cream product having too large an overrun and consequently a less stable product. Consequently, a second gas is included in addition to the first gas, which second gas substantially does not dissolve in the whipping-cream composition and ensures an adequate propellant capacity without having a significant effect on the expansion of the emulsion when this is dispensed. The use of mixtures for such a propellant and expansion medium is generally known per se in the art. Reference is made in this context, for example, to Sciarra, J.J., and Stoller, L., in The Science and Technology of Aerosol Packaging, 1974, published by John Wiley and Sons, New York, USA, pp. 432-433, and to EP-A-0747301, where such a propellant and expansion medium is used for limited-overrun delivery of viscous, gel-like or paste-like foods from a spray can. It has so far not been known in the art to use a propellant and expansion medium of this type for dispensing spray cream or a spray cream substitute with a view to obtaining a product which is comparable with hand-whipped cream. Those skilled in the art will immediately be able, on the basis of the teaching of the present description, to compose a propellant/expansion medium from a first and a second gas to obtain the desired overrun of the emulsion and an adequate propellant capacity for delivery from the spray can.

It should be noted in this context that the use of such a propellant and expansion medium as used in the pressure vessel according to the invention is not sufficient per se to obtain a spray cream or spray cream substitute. If the volume-weighted mean diameter of the fat particles in the emulsion has the customary value of 2.5 µm or less, and the fat content is less then 30%, a spray-cream-like product or spray cream is obtained, for example, which qualitatively is not comparable with hand-whipped cream.

The volume-weighted mean diameter of the fat particles of the fat emulsion is preferably 3.0 µm or more. The product obtained therewith is even less distinguishable from hand-whipped cream in terms of appearance, stability and mouth feel.

Preferably, the fat in the fat emulsion comprises at least 90% (w/w) milk fat, based on the total amount of fat. Whilst other fats or fat compositions in a pressure vessel according to the invention may likewise lead to the desired product, the taste of the product dispensed from the vessel is often not comparable with that of hand-whipped cream. In order to provide, therefore, a spray cream or spray cream substitute whose taste, in addition to its stability, appearance and mouth feel, substantially matches that of hand-whipped cream, the fat of the fat emulsion preferably mainly comprises milk fat, even though other edible vegetable, synthetic or animal fats may be incorporated in the emulsion in any desired combination. If it is desired, for example, to provide a low-cholesterol spray cream substitute, some or all of the milk fat in the emulsion can be replaced by vegetable fat.

Preferably, at least 90%, and preferably all, of the fat in the fat emulsion is formed by non-homogenized cream. The volume-weighted mean diameter of the milk fat particles of unhomogenized whipping cream is about 3.4 µm. The volume-weighted mean diameter of the milk fat particles of the emulsion according to the invention therefore preferably has the said value. Thus it is possible, surprisingly, using a vessel according to the invention, to prepare a spray cream which in contrast to spray cream from the prior art is indistinguishable or virtually indistinguishable from hand-whipped cream.

In an advantageous embodiment, the propellant and expansion medium selected is such that the overrun of the fat emulsion when dispensed is between 100% and 350%, preferably between 200 and 350% and most preferably is about 250%. "About" in this context allows for a deviation of 15%. If the overrun is about 250%, an optimal spray can whipping cream or optimal spray can whipping-cream-like product is obtained, which the consumer virtually does not distinguish from hand-whipped cream.

To achieve the desired overrun of the fat emulsion as dispensed from the vessel, the propellant and expansion medium comprises 40-80 vol%, preferably 50-70 vol% and most preferably 55-65 vol% of the first gas, which dissolves in the fat emulsion, and 20-60 vol%, preferably 30-50 vol% and most preferably 35-45 vol% of the second gas, which does not dissolve in the fat emulsion.

Whilst the purpose of obtaining the desired overrun for preparing a spray cream according to the invention can be served by any gas which dissolves in the emulsion to a sufficient extent for the desired overrun to be obtained, it is preferable, with a view to health and the taste of the emulsion, for the first gas to be nitrous oxide. Nitrous oxide (N₂O) is an inert gas which substantially does not affect the taste of the fat emulsion and is safe from a health point of view. Per se, other gases such as carbon dioxide (CO₂) are also suitable. Carbon dioxide, however, often has an adverse effect on taste.

The second gas can be any gas which substantially does not dissolve in the fat emulsion, said second gas also being required to be non-detrimental to health. The second gas is preferably selected from the group consisting of compressed air or nitrogen or a mixture thereof. Nitrogen substantially does not dissolve in the emulsion and therefore mainly acts as a propellant. In addition to compressed air or nitrogen, noble gases such as helium and argon are therefore also eligible, although noble gases are of less interest from an economic point of view. As already stated hereinabove, those skilled in the art will be readily able to make up the desired quantities of the first and second gas, preferably nitrous oxide and nitrogen, in order to obtain the desired consistency of the fat emulsion as dispensed from the pressure vessel according to the invention.

Since the particle size of the fat particles in the emulsion in the pressure vessel according to the invention is relatively large, the emulsion has an increased tendency to "creaming" (separation of the fat fraction and water fraction in the emulsion). Said creaming can lead to concentrated cream deposits within the vessel, as a result of which part of the contents cannot be dispensed and that part of the contents which is still to be dispensed is no longer able to lead to a whipping-cream(-like) product having the desired properties. To prevent creaming, the fat emulsion preferably contains an emulsion-stabilizing agent such as an emulsifier and/or stabilizer. Said emulsion-stabilizing agent is preferably selected from the group consisting of carrageen, alginate, xanthan, guar gum and carboxymethyl cellulose, mono- and diglycerides which may or may not be esterified, lecithin. The correct choice of the emulsion-stabilizing agent and its concentration will be evident to those skilled in the art. Generally, its concentration is below 1 wt%, and carrageen is preferred for being incorporated in the emulsion. Those skilled in the art will understand that an excess of emulsion-stabilizing agent may act as a thickener, which often leads to a slimy or gel-like product having an anomalous taste.

To give an optimal overrun and good delivery of the whipping-cream composition, the amount of propellant and expansion medium is between 1-3 wt%, based on the emulsion, preferably about 2 wt%. In this context, "about" accepts a deviation of 0.2 wt%.

The invention will be explained below in more detail with reference to a non-limiting example.

### Example 1.

| Formula 1 | | Formula 2 | |
|---|---|---|---|
| Cream 40% | 87.50 wt% | Cream 40% | 90.00 wt% |
| Sugar | 10.00 wt% | Glucose syrup | 5.00 wt% |
| Skimmed milk | 2.48 wt% | Sugar | 3.00 wt% |
| Carrageen | 0.02 wt% | Skimmed milk | 1.98 wt% |
| | | Carrageen | 0.02 wt% |

Formulas 1 and 2 contain about 35-36% of milk fat, based on the milk constituents of the emulsion. Both formulas allow a spray cream indistinguishable from hand-whipped cream to be obtained.

In addition to sugar and glucose syrup, other sweeteners known in the art can be used. Examples of such sweeteners are saccharins, cyclamate, fructose and maltodextrin.

To prepare the abovementioned compositions, the carrageen was dissolved in the skimmed milk and then added to the cream. The sugar and the glucose syrup were dissolved in the cream, the cream then being sterilized with the aid of a UHT process, being filled aseptically into spray cans, and being pressurized with a mixture of nitrous oxide and nitrogen. For each spray can having a brim-full volume of 405 ml (filled with about 250 ml of the formula in question), 5 g of the gas mixture were introduced. The gas mixture used comprised 65 vol% of nitrous oxide, the remainder being nitrogen.

## Claims

1. Pressure vessel, in particular a spray can, comprising:
- a liquid, unwhipped edible fat emulsion having a fat content of between 30 and 48% (w/w), wherein the volume-weighted mean diameter of fat particles is greater than 2.75 µm,
- dispensing means for dispensing the fat emulsion in the whipped state,
- a propellant and expansion medium which comprises
- 40-90 vol%, based on the medium, of a first gas which substantially dissolves in the emulsion,
- 10-60 vol%, based on the medium, of a second gas which substantially does not dissolve in the emulsion, wherein
- the propellant and expansion medium is selected such that the overrun of the fat emulsion when dispensed is between 100% and 450%.

2. Pressure vessel according to claim 1, characterized in that the volume-weighted mean diameter of the fat particles is 3.0 µm or more.

3. Pressure vessel according to claim 1 or 2, characterized in that the fat in the fat emulsion comprises at least 90 wt%, based on the total amount of fat, of milk fat, preferably at least 95 wt%.

4. Pressure vessel according to any one of the preceding claims, characterized in that at least 90%, and preferably all, of the fat in the fat emulsion is formed by non-homogenized cream.

5. Pressure vessel according to any one of the preceding claims, characterized in that the fat content of the emulsion is between 30 and 40% (w/w), preferably between 33 and 38%.

6. Pressure vessel according to any one of the preceding claims, characterized in that the propellant and expansion medium selected is such that the overrun of the fat emulsion when dispensed is between 200% and 400%, preferably between 250 and 350% and most preferably is about 250%.

7. Pressure vessel according to any one of the preceding claims, characterized in that the propellant and expansion medium comprises 40-80 vol%, preferably 50-70 vol% and most preferably 55-65 vol% of the first gas and 20-60 vol%, preferably 30-50 vol% and most preferably 35-45 vol% of the second gas.

8. Pressure vessel according to any one of the preceding claims, characterized in that the first gas is nitrous oxide.

9. Pressure vessel according to any one of the preceding claims, characterized in that the second gas is selected from the group consisting of compressed air or nitrogen or a mixture thereof.

10. Pressure vessel according to any one of the preceding claims, characterized in that the fat emulsion further includes at least one emulsion-stabilizing agent, preferably selected from the group consisting of carrageen, alginate, xanthan, guar gum and carboxymethyl cellulose, mono- and diglycerides which may or may not be esterified, lecithin, said agent preferably comprising carrageen.

11. Pressure vessel according to any one of the preceding claims, characterized in that the amount of propellant and expansion medium is between 1-3 wt%, based on the emulsion, preferably about 2 wt%.
